# EUROPÄISCHE PATENTANMELDUNG

(11) **EP 1 717 259 A1**
(43) Veröffentlichungstag der Anmeldung: **02.11.2006**
(21) Anmeldenummer: 06008072.8
(22) Anmeldetag: 19.04.2006
(51) Int. Cl.: C08G 65/331, C08F 2/20, C08F 2/24, C08F 216/12, C08F 16/12

(54) **Copolymerisierbare Polyalkylenglykol-Makromonomere, deren Herstellung und Verwendung**

(30) Priorität: 30.04.2005 DE 102005020265; 02.06.2005 DE 102005025269
(71) Anmelder: Clariant Produkte (Deutschland) GmbH, 65929 Frankfurt am Main (DE)
(72) Erfinder: Glos, Martin, Dr., 45145 Essen (DE)
(74) Vertreter: Mikulecky, Klaus

(57) **Zusammenfassung**

Gegenstand der Erfindung sind Verbindungen der Formeln 1 und 2 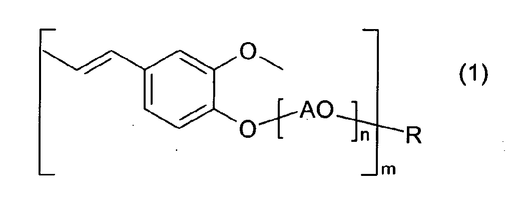 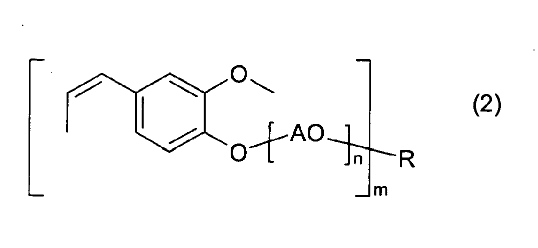 worin
A C₂- bis C₄-Alkylen,
n eine ganze Zahl von 4 bis 900,
m eine ganze Zahl von 1 bis 50, und
R Wasserstoff, eine m-wertige Säuregruppe, oder ein m-wertiger organischer Rest mit 1 bis 200 Kohlenstoffen, der außer Kohlenstoff und Wasserstoff auch Heteroatome wie beispielsweise Sauerstoff, Stickstoff, Schwefel oder Phosphor enthalten kann, bedeuten, sowie deren Verwendung als polymerisierbare Emulgatoren.

## Beschreibung

Die vorliegende Erfindung betrifft die Synthese von Isoeugenolpolyalkylenglykolen, und deren Anwendung z.B. als reaktive Emulgatoren oder hydrolysestabile Makromonomere für vielfältige Anwendungen im Bereich der Polymersynthese oder als reaktive Zwischenstufen für Synthesen oder als Duft- oder Aromastoffe.

Polyalkylenglykole werden im Allgemeinen durch anionische, ringöffnende Polymerisation von Epoxiden (wie z.B. Ethylenoxid und Propylenoxid) mit Alkoholen als Initiatoren (sogenannten Startalkoholen), gemäß Reaktionsgleichung 1 hergestellt. Als Katalysatoren können hierbei katalytisch wirksame Mengen von Alkali- oder Erdalkalihydroxiden oder die entsprechenden Alkalialkoholate eingesetzt werden. Mit R'-OH = Methanol entstehen so zum Beispiel α-Methoxy-Ω-hydroxy-Polyalkylenglykole, mit R'-OH = Butanol entsprechend α-Butoxy-Ω-hydroxy-Polyalkylenglykole:

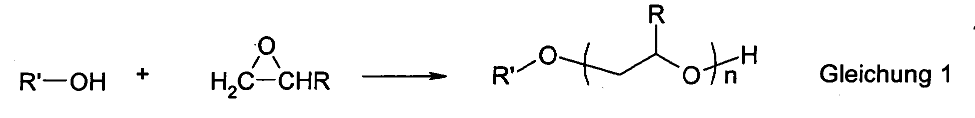

Polyalkylenglykolmakromonomere, also Polyalkylenglykole, die zusätzlich zur Polyetherkette eine endständige, reaktive, copolymerisierbare Doppelbindung enthalten, sind zur Herstellung von Kammpolymeren mit Polyalkylenglykolseitengruppen für eine Vielzahl von Anwendungen wie beispielsweise als reaktive copolymerisierbare Tenside oder beispielsweise als Comonomerbausteine zur Synthese von polymeren Dispergatoren interessant. Zur Herstellung dieser Polyalkylenglykolmakromonomere mit endständiger Doppelbindung gibt es grundsätzlich zwei Möglichkeiten.

Ausgehend von einem Polyalkylenglykol (z.B. Methylpolyglykol) kann eine endständige Doppelbindung durch Reaktion an der endständigen Hydroxygruppe beispielsweise durch Veresterung mit Methacrylsäure oder anderen ungesättigten Säuren eingeführt werden (Gramain, Polymer Commun 1986, 27, 16 ff). Nachteilig dabei ist, die Tatsache, dass es sich um eine mindestens zweistufige Synthese (1. Schritt: Herstellung des Polyalkylenglykols, 2. Schritt: Veresterung) handelt und die bei der anschließenden (Co-)polymerisation des Makromonomers entstehende Polyglykolseitenkette über eine Estergruppe an die Hauptkette gebunden, und daher nicht hydrolysestabil an der Hauptkette fixiert ist.

Alternativ kann ausgehend von einem olefinisch ungesättigten Alkohol R'-OH gemäß Gleichung 1 direkt das Polyalkylenglykol mit endständiger Doppelbindung synthetisiert werden. Mit R'-OH = Allylalkohol entstehen so in einer einstufigen Umsetzung gemäß Gleichung 1 α-Allyloxy-Ω-hydroxy-Polyalkylenglykole. Bei Bedarf kann das primär entstehende α-1-Allyloxy-Ω-hydroxy-Polyalkylenglykol noch durch Veretherung mit Alkylchloriden wie in DE-A-41 38 166 beschrieben in die entsprechenden α-1-Allyloxy-Ω-alkoxy-Polyalkylenglykole überführt werden.

Im Gegensatz zur vorstehend beschriebenen Synthese von Polyalkylenglykolmakromonomere durch Veresterung sind dabei die Polyetherseitenketten der resultierenden Kammpolymere über eine Etherverbindung mit dem Polymerrückgrat verknüpft und somit weitgehend hydrolysestabil.

Aufgabe der vorliegenden Erfindung war es, kostengünstige und lagerstabile Polyalkylenglykol-Makromonomere, die nach der Copolymerisation mit anderen ungesättigten Comonomeren eine hydrolysestabile chemische Bindung der Polyetherseitenkette im resultierenden Copolymer aufweisen, aufzufinden.

Es wurde nun gefunden, dass Isoeugenolpolyalkylenglykole diese Anforderungen erfüllen und auf einfachem Wege zugänglich sind. Sie sind geeignet, mit einer Vielzahl von Monomeren zu copolymerisieren, und dabei hydrolysestabile Copolymere (Kammpolymere) mit Polyalkylenglykol-Seitenketten zu bilden.

Gegenstand der Erfindung sind somit Verbindungen der Formeln 1 und 2 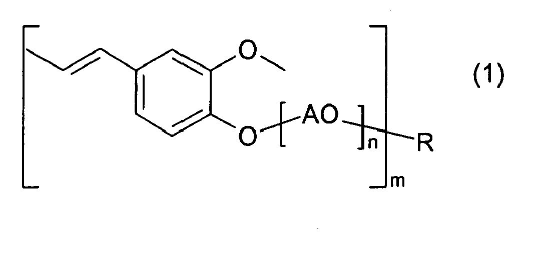 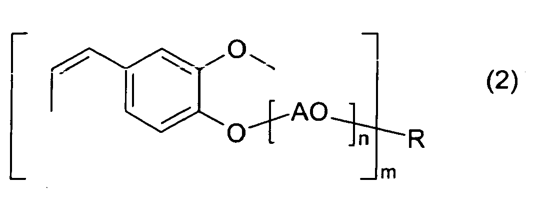 worin
- A: C₂- bis C₄-Alkylen,
- n: eine ganze Zahl von 4 bis 900,
- m: eine ganze Zahl von 1 bis 50, und
- R: Wasserstoff, eine m-wertige Säuregruppe, oder ein m-wertiger organischer Rest mit 1 bis 200 Kohlenstoffen, der außer Kohlenstoff und Wasserstoff auch Heteroatome wie beispielsweise Sauerstoff, Stickstoff, Schwefel oder Phosphor enthalten kann, bedeuten.

In den Formeln 1 und 2 sind die trans- und die cis-Form der erfindungsgemäßen Isoeugenol-Derivate dargestellt. Im Folgenden wird nur noch die trans-Form abgebildet, wobei aber die cis-Form ebenfalls erfindungsgemäß ist. Die erfindungsgemäßen Verbindungen der Formel 1 und 2 werden im Folgenden auch als Isoeugenolpolyalkylenglykole bezeichnet.

Ein weiterer Gegenstand der Erfindung ist die Verwendung von Verbindungen der Formeln 1 und/oder 2 als Monomer in Polymerisationsreaktionen.

Ein weiterer Gegenstand der Erfindung ist die Verwendung von Verbindungen der Formeln 1 und/oder 2 als polymerisierbare Emulgatoren.

Ein weiterer Gegenstand der Erfindung ist ein Verfahren zur Herstellung eines emulgierten Copolymerisats, indem man zur radikalischen Polymerisation befähigten, olefinisch ungesättigten Verbindungen eine Verbindung der Formel 1 und/oder 2 zusetzt, und das so erhaltene Gemisch in wässriger Phase polymerisiert.

Ein weiterer Gegenstand der Erfindung sind Copolymere und ihre Dispersionen, enthaltend Monomere der Formeln 1 und/oder 2 und mindestens ein weiteres olefinisch ungesättigtes Monomer.

A steht vorzugsweise für Ethylenreste oder für Mischungen aus Ethylen- und Propylenresten.

m steht vorzugsweise für eine ganze Zahl von 1 bis 10.

In der durch (A-O)ₙ wiedergegebenen Alkoxykette bedeutet A vorzugsweise einen Ethylen- oder Propylenrest, insbesondere einen Ethylenrest. Die Gesamtzahl von Alkoxyeinheiten liegt vorzugsweise zwischen 5 und 300, insbesondere zwischen 8 und 200. Bei der Alkoxykette kann es sich um eine Blockpolymerkette handeln, die alternierende Blöcke verschiedener Alkoxyeinheiten, vorzugsweise Ethoxy- und Propoxyeinheiten, aufweist. Es kann sich dabei auch um eine Kette mit statistischer Abfolge der Alkoxyeinheiten oder ein Homopolymer handeln.

In einer bevorzugten Ausführungsform steht -(A-O)ₘ- für eine Alkoxykette der Formel

― (CH₂―CH(CH₃)―O)ₐ―(CH₂―CH₂―O)_{b}―(CH₂―CH(CH₃)―O)_{c}―

worin
- a: eine Zahl von 0 bis 300, vorzugsweise 0 bis 80
- b: eine Zahl von 5 bis 300, vorzugsweise 5 bis 200
- c: eine Zahl von 0 bis 300, vorzugsweise 0 bis 80 bedeuten.

In einer weiteren bevorzugten Ausführungsform steht -(A-O)ₙ- für einen Ethoxyrest mit 8 bis 240 Ethoxyeinheiten.

Allen Ausführungsformen gemein ist, dass vorzugsweise mindestens 50 mol-% der Reste (A-O) Ethoxyreste sind, insbesondere sind 60 bis 100 mol-% Ethoxyreste.

R ist eine m-wertige Säuregruppe oder Wasserstoff oder ein gesättigter oder ungesättigter, cyclischer oder acyclischer organischer Rest mit 1 bis 200 Kohlenstoffatomen, der außer Kohlenstoff und Wasserstoff auch Heteroatome wie beispielsweise Sauerstoff, Stickstoff, Schwefel oder Phosphor enthalten kann. Ist R eine Säuregruppe, so kann es sowohl eine monomere oder eine polymere Säuregruppe bzw. eine mono- oder polyfunktionelle Einheit (m-funktionell) sein. Ist R Wasserstoff, so ist m gleich 1.

Beispiele anorganischer Säuren von denen die Säuregruppe R sich ableiten kann, sind Schwefelsäure und Phosphorsäure. Kommt Schwefelsäure zur Verwendung, so können die Verbindungen der Formel 1 und/oder 2 entweder Monoester oder Diester der Schwefelsäure sein, d.h. m ist 1 oder 2. Kommt Phosphorsäure zur Verwendung, so können die Verbindungen der Formel 1 und/oder 2 entweder Monoester, Diester oder Triester der Phosphorsäure sein, d.h. m ist 1, 2 oder 3.

Bei den organischen Säuren von denen R sich ableiten kann, handelt es sich in einer bevorzugten Ausführungsform um ein-, zwei-, drei- oder mehrwertige Carbonsäuren, d.h. Verbindungen, die 1, 2, 3 oder mehr Carboxylgruppen enthalten und die darüber hinaus noch mindestens eine schwefel- oder phosphorhaltige funktionelle Gruppe aufweisen können. Besonders bevorzugt sind schwefelhaltige funktionelle Gruppen, speziell Sulfonatgruppen. Bevorzugte Sulfonsäuren/Sulfonate können aliphatische oder aromatische Verbindungen sein. Bevorzugte Sulfonsäuren/Sulfonate enthalten 2 oder 3 Carboxylgruppen, und unter Einschluss der Carboxylgruppen, 3 bis 6 Kohlenstoffatome. Eine besonders bevorzugte Sulfonsäure ist die Sulfobernsteinsäure.

Bei den Sulfon- und Carbonsäuren handelt es sich in einer bevorzugten Ausführungsform um aromatische oder aliphatische Verbindungen die eine oder mehrere Säurefunktionen tragen.

Bei den Carbonsäure kann es sich auch um ungesättigte Carbonsäuren handeln wie beispielsweise Acrylsäure, Methacrylsäure oder Maleinsäure.

Bevorzugte Isoeugenolalkoxylate, bei denen R nicht für Wasserstoff steht, können beispielsweise folgende Strukturen der Formeln 3 bis 10 haben. 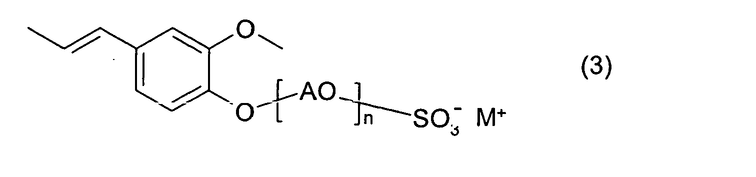 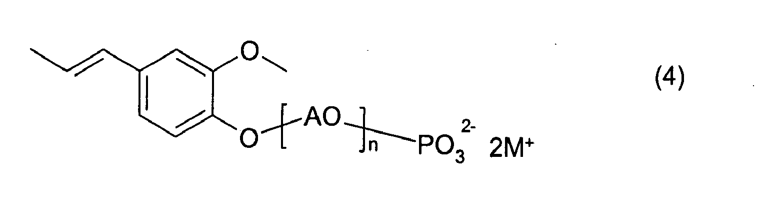 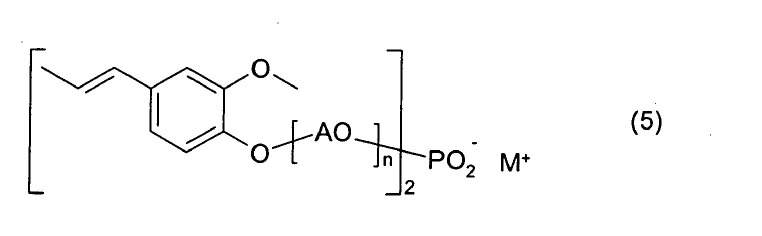 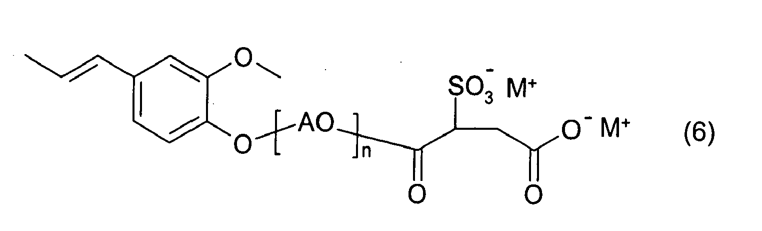 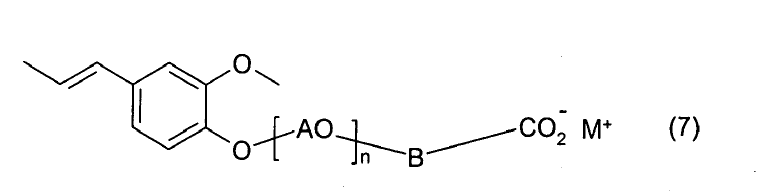 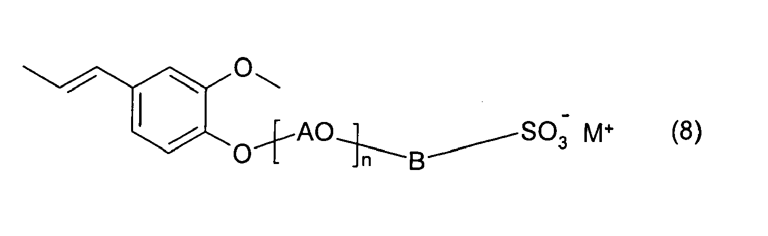 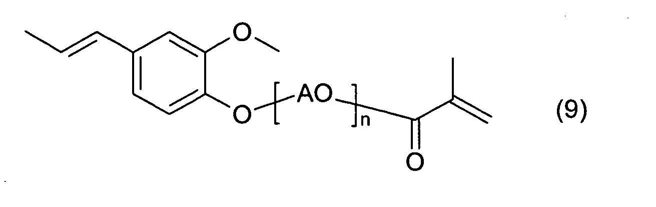 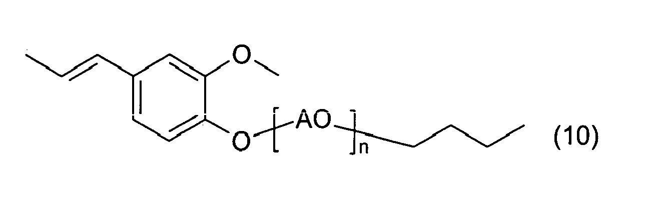 worin B für eine aliphatische oder aromatische Gruppe mit 1 bis 50 Kohlenstoffatomen, die auch Heteroatome enthalten kann, und M⁺ für
- ein einwertiges Metallion wie beispielsweise ein Alkalimetallion,
- ein Ammoniumion wie etwa NH₄⁺ oder Mono-, Di-, Tri- und/oder Tetraalkylammoniumionen, wobei es sich bei den Alkylsubstituenten dieser Ammoniumionen unabhängig voneinander um C₁- bis C₂₂-Alkylreste handeln kann, die gegebenenfalls mit bis zu 30 C₂- bis C₁₀-Hydroxyalkylgruppen besetzt sein können,
- H⁺ , oder
- Äquivalente von zwei-, drei- oder mehrwertigen Metallionen wie beispielsweise Ca²⁺ oder Al³⁺, steht.

Die erfindungsgemäßen Verbindungen können dadurch hergestellt werden, dass man die zugrunde liegenden Alkoxylate mit geeigneten Säuren oder entsprechenden Säurederivaten umsetzt. Die Herstellung von Sulfatestern erfolgt vorzugsweise mit Amidosulfonsäure. Die dadurch erhaltenen Ammoniumsalze können durch Umsetzung mit Alkali-Hydroxiden in die entsprechenden Alkalisalze überführt werden. Für die Herstellung von Phosphorsäureestern kann Phosphorsäure verwendet werden. Die Methacrylsäureester kann man durch Direktveresterung mit -Methacrylsäure oder Umesterung beispielsweise mit Methylmethacrylat herstellen. Organische Säuren können auch in Form ihrer Anhydride mit den zugrunde liegenden Alkoxylaten umgesetzt werden. Die Einfügung funktioneller Gruppen kann auch nach der Herstellung des Esters der nicht funktionalisierten Säure erfolgen. So kann die Herstellung von Sulfobernsteinsäureestern durch Herstellung der entsprechenden Maleinsäureester und der nachfolgenden Sulfonierung beispielsweise mit Pyrosulfiten erfolgen.

Die Herstellung der Sulfonsäuren, Carbonsäuren und Phosphonsäuren kann auch durch Umsetzung der zugrunde liegenden Alkoxylate mit den entsprechenden Halogeniden oder cyclischen Estern der Sulfon- oder Carbonsäuren erfolgen.

Die entsprechenden Alkyl-Derivate lassen sich herstellen indem man die zugrunde liegenden Alkoxylate in einer Williamsonschen Ethersynthese im alkalischen mit Alkylhalogeniden wie beispielsweise Butylchlorid umsetzt.

Die erfindungsgemäßen Verbindungen sind, mit Ausnahme der entsprechenden Ester von polymerisierbaren Säuren wie beispielsweise gemäß Formel 9, selbst nicht homopolymerisierbar, da die Propenyl-Styrylgruppe im Gegensatz zu Acryl- oder Methacrylestergruppen nicht zur Homopolymerisation in der Lage ist (vgl. B. Vollmert, Grundriss der Makromolekularen Chemie Band I S. 55). Damit sind die erfindungsgemäßen Makromonomeren lagerstabil. Sie können jedoch mit weiteren olefinisch ungesättigten Verbindungen zur Polymerisation gebracht werden. Dies kann nach den in der Technik bekannten Verfahren erfolgen (beispielsweise Substanzpolymerisation, Lösungspolymerisation, Emulsionspolymerisation). Dadurch können die resultierenden Polymere beispielsweise als Polymerdispersion, Polymerlösung oder auch als massives Polymer anfallen.

Es können in den verschiedenen Polymerisationsmethoden die nach dem Stand der Technik bekannten Radikalstarter verwendet werden.

Ebenso können zur Steuerung des Molekulargewichts und Beeinflussung der Polymerstruktur vernetzende Monomere und/oder Regler verwendet werden.

Durch radikalisch initiierte Copolymerisation der polymerisierbaren Makromonomere mit olefinisch ungesättigten Comonomeren entstehen die erfindungsgemäßen Copolymere. Als Comonomere können alle olefinisch ungesättigten Monomere eingesetzt werden, deren Reaktionsparameter eine Copolymerisation mit den erfindungsgemäßen Verbindungen in den jeweiligen Reaktionsmedien erlauben.

Dies sind z.B. offenkettige N-Vinylamide, bevorzugt
N-Vinylformamid (VIFA), N-Vinylmethylformamid, N-Vinylmethylacetamid (VIMA) und N-Vinylacetamid; cyclischen N-Vinylamide (N-Vinyllactame) mit einer Ringgröße von 3 bis 9, bevorzugt N-Vinylpyrrolidon (NVP) und N-Vinylcaprolactam; Amide der Acryl- und Methacrylsäure, bevorzugt Acrylamid, Methacrylamid, N,N-Dimethylacrylamid, N,N-Diethylacrylamid und N,N-Diisopropylacrylamid; alkoxylierte Acryl- und Methacrylamide, bevorzugt Hydroxyethylmethacrylat, Hydroxymethylmethacrylamid, Hydroxyethylmethacrylamid, Hydroxypropylmethacrylamid und Bernsteinsäuremono-[2-(methacryloyloxy)ethylester]; N,N-Dimethylaminomethacrylat; Diethylamino-methylmethacrylat; Acryl- und Methacrylamidoglykolsäure; 2- und 4-Vinylpyridin; Vinylacetat; Methacrylsäureglycidylester; Styrol; Acrylnitril.
Ungesättigte Aminderivate wie z.B. Diallylamin, Diallyldimethylammoniumchlorid oder Trimethyl-2-methacryloylethylammoniumchlorid.
Olefine, wie Ethylen, Propen und Butene, Penten, 1,3-Butadien und Chloropren, Vinylhalogenide, wie Vinylchlorid, Vinylidenchlorid und Vinylidenfluorid.
Alkoxylierte Allyl, Vinyl-Verbindungen und Vinylether
Olefinisch ungesättigte Carbonsäureester, basierend auf verschiedensten Alkoholen und ungesättigten Carbonsäure wie z.B. Ethylacrylat, n-Butylacrylat, Butylacrylat, Hexylacrylat, 2-Ethylhexylacrylat, Hydroxyethylacrylat, Stearylacrylat; Laurylmethacrylat, Dibutylmaleinat, Methylpolygylkol-1000-methacrylat, Nonylphenolpolyalkylenglykolmethacrylate, Tributylphenolpolyalkylenglykolmethacrylate etc.

Zusätzlich können eine oder mehrere ungesättigte Carbonsäuren bzw. deren Salze in das Copolymer einpolymerisiert sein. Insbesondere bevorzugt sind Acrylsäure, Methacrylsäure, Styrolsulfonsäure, Maleinsäure, Fumarsäure, Crotonsäure, Itaconsäure und Seneciosäure.

Ebenso können auch olefinisch ungesättigte Sulfonsäuren und Phosphonsäuren wie Acrylamidomethylpropansulfonsäure, Methallylsulfonsäure oder Vinylphosphonsäure-Derivate eingesetzt werden.

Als Gegenionen dieser Säuren bevorzugt sind Li⁺, Na⁺, K⁺, Mg⁺⁺, Ca⁺⁺, Al⁺⁺⁺, NH₄⁺, Monoalkylammonium-, Dialkylammonium-, Trialkylammonium- und/oder Tetraalkylammoniumreste, wobei es sich bei den Alkylsubstituenten der Amine unabhängig voneinander um (C₁-C₂₂)-Alkylreste handeln kann, die gegebenenfalls mit bis zu 3 (C₂-C₁₀)-Hydroxyalkylgruppen besetzt sein können. Zusätzlich können auch ein bis dreifach ethoxylierte Ammoniumverbindungen mit unterschiedlichem Ethoxylierungsgrad Anwendung finden. Der Neutralisationsgrad der Carbonsäuren kann zwischen 0 und 100 % betragen.

Die erfindungsgemäßen Copolymere können gegebenenfalls Comonomere mit mehr als einer polymerisationsfähigen Einheit enthalten. Comonomere mit mehr als einer polymerisationsfähigen Einheit führen zur Vernetzung der erfindungsgemäßen Strukturen. In einer entsprechenden Ausführungsform enthalten die Copolymere Comonomere mit mindestens zwei polymerisationsfähigen Vinylgruppen.

Bevorzugte Vernetzer sind Methylenbisacrylamid; Methylenbismethacrylamid; Ester ungesättigter Mono- und Polycarbonsäuren mit Polyolen, bevorzugt Diacrylate und Triacrylate bzw. -methacrylate (z.B.: PEG-400-dimethacrylat), besonders bevorzugt Butandiol- und Ethylenglykoldiacrylat bzw. -methacrylat, Trimethylolpropantriacrylat (TMPTA) und Allylverbindungen, bevorzugt Allyl(meth)acrylat, Triallylcyanurat, Maleinsäurediallylester, Polyallylester, Tetraallyloxyethan, Triallylamin, Tetraallylethylendiamin; Allylester der Phosphorsäure; und/oder Vinylphosphonsäurederivate. Besonders bevorzugt als Vernetzer ist Trimethylolpropantriacrylat (TMPTA) und Timethylolpropantrimethacrylat (TMPTMA).

Mischungen von einfach vinylisch ungesättigten Comonomeren mit mehrfach ungesättigten Comonomeren (Vernetzer) sind ebenfalls erfindungsgemäß.

Die erfindungsgemäßen Verbindungen können als reaktive Emulgatoren sowohl alleine als auch in Kombination mit anderen bereits bekannten kationischen, anionischen und nichtionischen Emulgatoren des Standes der Technik verwendet werden.

Im allgemeinen werden die erfindungsgemäßen Verbindungen in Mengen von 0,1 bis 99, vorzugsweise 0,2 bis 95, insbesondere 0,4 bis 90 Gew.-%, bezogen auf das Gewicht der für die Herstellung der Polymere verwendeten olefinisch ungesättigten Monomere als Emulgatoren bzw. Comonomer verwendet.

Die erfindungsgemäßen Isoeugenolpolyalkylenglykole können durch Umsetzung von Eugenol oder Isoeugenol mit Ethylenoxid, Propylenoxid oder anderen Epoxiden unter geeigneten Reaktionsbedingungen direkt in einem Schritt hergestellt werden. In einem Schritt bedeutet in diesem Zusammenhang ohne Isolierung eines Zwischenprodukts und ist entscheidend für die Wirtschaftlichkeit des Verfahrens.

Folgende Beispiele verdeutlichen die Erfindung näher.

### Beispiel 1

In einem Druckreaktor wurden 150 g Eugenol mit 0,87 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 160°C 402 g Ethylenoxid langsam zudosiert, so dass der Druck nicht über 6 bar anstieg. Der resultierende Polyether wurde mit Essigsäure auf einen pH-Wert von 7 neutralisiert und mittels ¹H-NMR analysiert. Im NMR-Spektrum wurden Signale eines Isoeugenolethoxylats mit 10 Ethylenglykol-Einheiten pro Aromaten-Rest gefunden.

### Beispiel 2

In einem Druckreaktor wurden 200 g Isoeugenol mit 1,2 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 160°C 537 g Ethylenoxid langsam zudosiert, so dass der Druck nicht über 6 bar anstieg. Der resultierende Polyether wurde mit Milchsäure auf einen pH-Wert von 7 neutralisiert und mittels ¹H-NMR analysiert. Im NMR-Spektrum wurden Signale eines Isoeugenolethoxylats mit 10 Ethylenglykol-Einheiten pro Aromaten-Rest gefunden.

### Beispiel 3

In einem Druckreaktor wurden 300 g Eugenol mit 0,79 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 160°C 402 g Ethylenoxid langsam zudosiert, so dass der Druck nicht über 6 bar anstieg. Der resultierende Polyether wurde mit Milchsäure auf einen pH-Wert von 7 neutralisiert und mittels ¹H-NMR analysiert. Im NMR-Spektrum wurden Signale eines Isoeugenolethoxylats mit 5 Ethylenglykol-Einheiten pro Aromaten-Rest gefunden.

### Beispiel 4

In einem Druckreaktor wurden 160 g Eugenol mit 1,48 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 160°C 860 g Ethylenoxid langsam zudosiert, so dass der Druck nicht über 6 bar anstieg. Der resultierende Polyether wurde mit Milchsäure auf einen pH-Wert von 7 neutralisiert und mittels ¹H-NMR analysiert. Im NMR-Spektrum wurden Signale eines Isoeugenolethoxylats mit 20 Ethylenglykol-Einheiten pro Aromaten-Rest gefunden.

### Beispiel 5

In einem Druckreaktor wurden 80 g Eugenol mit 1,48 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 160°C 860 g Ethylenoxid langsam zudosiert, so dass der Druck nicht über 6 bar anstieg. Der resultierende Polyether wurde mit Milchsäure auf einen pH-Wert von 7 neutralisiert und mittels ¹H-NMR analysiert. Im NMR-Spektrum wurden Signale eines Isoeugenolethoxylats mit 40 Ethylenglykol-Einheiten pro Aromaten-Rest gefunden.

### Beispiel 6

In einem Druckreaktor wurden 200 g Eugenol mit 2,6 g Natriummethanolat, gelöst in Methanol, versetzt und das Gemisch anschließend zur Entfernung von Methanol für 3 Stunden im Vakuum bei 70°C gerührt. Anschließend wurden bei einer Temperatur von 140°C 354 g Propylenoxid langsam zudosiert, so dass der Druck nicht über 4 bar anstieg. Der resultierende Polyether wurde mit Isononansäure auf einen pH-Wert von 7 neutralisiert und mittels ¹H-NMR analysiert. Im NMR-Spektrum wurden Signale eines Isoeugenolpropoxylats mit 5 Propylenglykol-Einheiten pro Aromaten-Rest gefunden.

### Beispiel 7

In einem Druckreaktor wurden zu 200 g des unneutralisierten Produkts aus Beispiel 6 bei einer Temperatur von 160°C 194 g Ethylenoxid langsam zudosiert, so dass der Druck nicht über 6 bar anstieg. Der resultierende Polyether wurde mit Milchsäure auf einen pH-Wert von 7 neutralisiert und mittels ¹H-NMR analysiert. Im NMR-Spektrum wurden Signale eines Isoeugenolalkoxylats mit 5 Propylenglykol- und 10 Ethylenglykol-Einheiten pro Aromaten-Rest gefunden.

### Beispiel 8

In einem Glasreaktor wurden in einer Stickstoffatmosphäre 140 g des in Beispiel 4 hergestellten Isoeugenolethoxylats unter Rühren mit 49 g Methylmethacrylat, 0,9 g Butylhydroxytoluol, 0,5 g p-Methoxyphenol und 1,4 g Dibutylzinnoxid versetzt. Es wurde für 14 Stunden auf 100-130°C erwärmt und das dabei entstehende Destillat abdestilliert. Über NMR-Spektroskopie konnte ein Umsetzungsgrad von > 95 % zum entsprechenden Methacrylsäureester ermittelt werden.

### Beispiel 9

In einem Glasreaktor wurden in einer Stickstoffatmosphäre 100 g des in Beispiel 1 hergestellten Isoeugenolethoxylats unter Rühren mit 0,5 g Harnstoff und 16 g Amidosulfonsäure versetzt und für 4 Stunden auf 100°C erwärmt. Anschließend wurde mit 0,25 g 50%iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

### Beispiel 10

440 g eines Alkohols, der nach Beispiel 1 hergestellt wurde, wurden bei 70°C mit 85 g Polyphosphorsäure versetzt und 2 h bei 70°C gerührt. Nach weiteren 2 h bei 100°C wurden bei 90°C 22 g Wasser zugegeben und nochmals 2 h gerührt. Es wurde ein Produkt erhalten, das eine Mischung aus 87 Gew.-% Phosphorsäuremonoester und 10 Gew.-% Phosphorsäurediester war, Rest Wasser. Das Produkt enthielt keinen Phosphorsäuretriester.

### Beispiel 11

300 g eines Alkohols, der nach Beispiel 1 hergestellt wurde, wurden unter Stickstoff zu 49 g Maleinsäureanhydrid bei 70°C zugetropft. Die Mischung wurde anschließend für 8 h auf 90°C erwärmt, wobei das entstehende Wasser abdestilliert wurde. Das erhaltene Produkt wurde zu einer Mischung aus 26 g Natriumpyrosulfit, 20 g NaOH und 390 g dest. Wasser gegeben und für 5 h auf 80°C erwärmt. Es wurde eine Lösung des entsprechenden Sulfosuccinats mit einem Gehalt von 50 Gew.-% erhalten.

## Patentansprüche

1. Verbindungen der Formeln 1 und 2 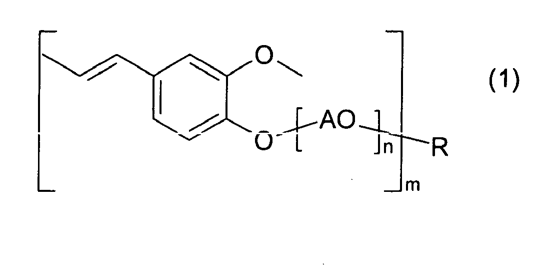 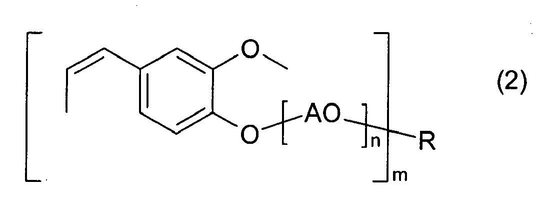 worin
A C₂- bis C₄-Alkylen,
n eine ganze Zahl von 4 bis 900,
m eine ganze Zahl von 1 bis 50, und
R Wasserstoff, eine m-wertige Säuregruppe, oder ein m-wertiger organischer Rest mit 1 bis 200 Kohlenstoffen, der außer Kohlenstoff und Wasserstoff auch Heteroatome wie beispielsweise Sauerstoff, Stickstoff, Schwefel oder Phosphor enthalten kann, bedeuten.

2. Verbindungen nach Anspruch 1, worin A für Ethylenreste oder Ethylen- und Propylenreste steht.

3. Verbindungen nach Anspruch 1 und/oder 2, worin m für eine ganze Zahl von 1 bis 10 steht.

4. Verwendung von Verbindungen der Formeln 1 und/oder 2 als polymerisierbarer Emulgator.

5. Verfahren zur Herstellung eines emulgierten Copolymerisats, indem man zur radikalischen Polymerisation befähigten, olefinisch ungesättigten Verbindungen eine Verbindung der Formel 1 und/oder 2 zusetzt, und das so erhaltene Gemisch in wässriger Phase polymerisiert.

6. Copolymere und ihre Dispersionen, enthaltend Monomere der Formeln 1 und/oder 2 und mindestens ein weiteres olefinisch ungesättigtes Monomer.

7. Copolymere und ihre Dispersionen nach Anspruch 6, wobei das weitere olefinisch ungesättigte Monomer ausgewählt ist aus offenkettigen N-Vinylamiden, cyclischen N-Vinylamide (N-Vinyllactame) mit einer Ringgröße von 3 bis 9, Amide der Acryl- und Methacrylsäure, alkoxylierte Acryl- und Methacrylamide, N,N-Dimethylaminomethacrylat; Diethylamino-methylmethacrylat, Acryl- und Methacrylamidoglykolsäure, 2- und 4-Vinylpyridin, Vinylacetat, Methacrylsäureglycidylester, Styrol, Acrylnitril,Diallylamin, Diallyldimethylammoniumchlorid, Trimethyl-2-methacryloylethylammoniumchlorid, Ethylen, Propen, Butene, Penten, 1,3-Butadien und Chloropren, Vinylchlorid, Vinylidenchlorid und Vinylidenfluorid, alkoxylierte Allyl-, Vinyl-Verbindungen und Vinylether, olefinisch ungesättigte Carbonsäureester, Acrylsäure, Methacrylsäure, Styrolsulfonsäure, Maleinsäure, Fumarsäure, Crotonsäure, Itaconsäure, Seneciosäure, Acrylamidomethylpropansulfonsäure, Methallylsulfonsäure oder Vinylphosphonsäure-Derivate.
